# EUROPEAN PATENT SPECIFICATION

(11) **EP 3 446 179 B1**
(45) Date of publication and mention of the grant of the patent: **23.08.2023**
(21) Application number: 17725722.7
(22) Date of filing: 24.04.2017
(51) Int. Cl.: G03B 21/56, H04N 7/14, G03B 17/54, G03B 21/62

(54) **PROJECTION APPARATUS AND METHODS**
PROJEKTIONSVORRICHTUNG UND -VERFAHREN
APPAREIL ET PROCÉDÉS DE PROJECTION

(30) Priority: 22.04.2016 GB 201607078; 12.10.2016 GB 201617314
(43) Date of publication of application: 27.02.2019
(73) Proprietor: Berry, Elisabeth, London SW15 1AZ (GB)
(72) Inventor: Berry, Elisabeth, London SW15 1AZ (GB)
(74) Representative: Brothers, Christopher Michael
(86) International application number: PCT/GB2017/051128
(87) International publication number: WO 2017/182829

(56) References cited:
- WO-A1-2009/116693
- GB-A- 396 714
- GB-A- 960 731
- GB-A- 2 512 824
- JP-A- 2003 066 535
- JP-A- 2006 077 376
- JP-A- 2006 243 453
- JP-A- 2016 114 701
- US-A- 1 459 603
- US-A- 1 985 460
- US-A- 4 006 965
- US-A- 5 258 870
- Karl Mayer: "Sonderdruck aus 2007 des Maschinenherstellers" In: "Sonderdruck aus 2007 des Maschinenherstellers", 1 January 2007 (2007-01-01), XP055261735,

## Description

### FIELD OF THE INVENTION

The present invention relates to projection apparatus and methods and in particular to the use of a semi-transparent projection screen to allow two-dimensional projected images to appear as three dimensional, realistic representations of life size objects or people, or to create live special effects appearing in free space.

### BACKGROUND OF THE INVENTION

It is desirable to be able to create an effect of people or objects that seem to be real, but in fact are not present.

This illusion might be used to allow a person who cannot be physically present or a fantasy character that doesn't exist to appear to an audience, or to make 'impossible' floating effects live on stage.

The effect could also be used to allow two people in different locations to have a joint business meeting in which each person sees the other apparently seated at the same table, without the inconvenience or cost of one or both of them having to travel.

The illusion is achieved using high quality video content replayed with a certain arrangement of equipment and lighting to induce a three-dimensional (3D) effect. As the video content is in fact two-dimensional (2D) not 3D, there is some skill to presenting these images such that they are virtually indistinguishable from the real thing without the need for special viewing glasses. These types of images are commonly called 'holograms' or `holographic projections', and while this is not technically correct, staged properly they can produce highly realistic representations of 3D objects and even people which appear in a space, void or on stage as if the object or person was really there. For the purposes of this document, the terms `hologram' and 'holographic' refers to this kind of image.

One of the ways to produce this effect is to put a projection onto the front (i.e. an audience side) of a particular type of gauze or screen made from thin translucent fabric. It will appear solid where projected on, but it goes transparent when objects or surfaces behind it are lit up, thereby allowing a background to be seen through it. The projected image appears as a spontaneous 3D entity inhabiting a space.

Such a fabric can, in general, be in the form of semi-transparent gauzes or fine nets (otherwise known as 'scrims', 'sheers', 'voiles' or 'tulles') which are well known for exhibiting these twin properties of solidity and transparency under different lighting conditions, which are often exploited on stage as a 'gauze reveal': i.e. a scene is hidden behind a gauze, which is front lit and therefore opaque. Reducing the brightness of the front light, and lighting up the scene behind the gauze makes the gauze transparent, and the scene is thereby revealed.

Traditionally these gauze screens are made from lightweight materials in which the threads or yarns from which they are constructed are silver coloured or shiny in order to reflect the maximum amount of the front light (which may be a laser, video or other light source) projected onto it in order that it retains a maximum amount of brightness. A high level of transparency when lit from behind enables the front light effect and the background to be viewed together. However, there is a balance between the level of transparency and the brightness achievable.

Traditional stage gauze screens are normally black or white, or less frequently a shade in between, or even a colour.

Black gauze screens, being dark, generally go very transparent and are normally quite difficult to see, as a black surface does not reflect very much light, especially under darkened viewing conditions such as one might have in a theatre. However, this low reflectivity means the projection onto it is correspondingly dim, and the background may also appear suspiciously tinted due to the presence of the fabric. This is particularly apparent when the gauze only covers part of a stage, providing a direct visual comparison between areas with and without it.

White gauze screens generally make good, bright projection surfaces as they reflect well, but they are therefore difficult to conceal. The smallest amount of ambient light in front of a white gauze not only discloses a white surface, but also compounds the problem by making it look solid.

Any shade of gauze in between black and white will be a compromise between the brightness of the projection and the obviousness of the gauze screen and may additionally shift the colour of the projection if the gauze is a strong colour.

Shiny silver-coloured gauze screens or those with metal-coated threads through the yarn often combine a high degree of light reflectivity with good transparency. However, a problem exists in that the resultant shiny or sparkly appearance, although attractive, makes the gauze visually obvious, and high quality content projection is difficult because the surface does not reflect light evenly.

In short, there is not a satisfactory solution to be had in conventional yarns and fabrics.

Two of the most desirable characteristics of a gauze screen on which to project holographic images are that it provides a good quality, bright projection surface for a projector device located in front of it, and that it goes very transparent when lighting is arranged behind it illuminating a background that can then be seen.

In addition to the above, it is desirable that it the gauze screen itself is as invisible as possible providing the illusion to the viewing audience that is most convincing when there is no suspicion of a projection surface present. There is therefore a technical problem in creating a gauze screen surface that both reflects the projected light very efficiently to give a bright and high-quality image, and simultaneously rejects ambient light in the viewing area so it remains undisclosed to an audience. This difficulty is not well addressed by conventional gauze screen textiles.

In order to create realistic holographic illusions, carefully chosen video images front projected onto the gauze screen must appear to realistically inhabit the environment surrounding it. The backlighting may be either more video projections, or other kinds of light, and are deployed in order to enhance the 3D realism of the whole effect. Specifically, it is important that the area behind the projected image is black in order that the image does not go transparent, and light is arranged to illuminate objects or surfaces above and to the sides of the projected image in order to define the three dimensional space it is perceived to inhabit.

The projected images need to look very life-like for to it to be believed that a real person is actually present. This is not easily achieved with present solutions.

Stage gauze screens need to be as wide as possible, and bobbinet weaves are commonly used because they can be manufactured in the required widths without seams which would otherwise be visible. However, making bobbinet weaves is a slow and labour-intensive process, using traditional machines which are often decades old. A bobbinet weave typically uses threads in three directions to create a net. A series of fixed vertical threads (or warp yarns) are set, and two further yarns on bobbins (bobbinet yarns) weave through them on diagonal paths, looping around the warp yarns where they cross to make a net with substantially hexagonal spaces between the yarns. The result is that the warp yarns run vertically through the piece from top to bottom, and the two sets of bobbin yarns run diagonally; one from top left to bottom right and the other from top right to bottom left. Therefore, within a typical bobbinet weave a significant percentage of the warp yarns end up hidden underneath the looped bobbin yarns. This percentage will vary with yarn thicknesses and hole size, but 25% or more would not be unusual.

Fine bobbinet projection gauze screens are also very fragile and although best suited for a permanent installation, this kind of gauze screen is often specified for temporary use, for example in a touring stage show or as a hire stock for an audio-visual company. This means rigging and derigging the delicate gauze screen in varying locations, often by people in a hurry. In these situations, a large and delicate gauze, perhaps 8m x 5m, is at risk to damage; it can easily catch on small protrusions such as nails, staples or splinters, and is likely to get stepped on when it's lying on the floor. Once rigged, people often walk into it owing to its transparency in certain lighting conditions which will damage it.

Moreover, the delicate bobbinet yarns are particularly prone to catching, and when they do, it creates a visible line of tension or puckering along the length of any affected thread, which is highly detrimental to the projection surface. This line may extend quite some distance across the wide screen, typically along a diagonal path. This is a problem intrinsic to gauzes in which an open weave offers threads likely to catch, and the loosely woven yarns allow caught threads to pull quite easily through long distances.

Furthermore, if someone walks into a tensioned gauze screen, or pushes a hard object into it, the fabric may permanently distort, as the yarns pull through each other where pressure was applied.

The vulnerability of tight threads can sometimes be seen in the manufacturing process, where slightly over-tensioned yarns on the bobbins, known as tight bobbins, can leave visible lines across the diagonals of the whole screen, again to the detriment of the projections. It is preferable to project onto a surface that is as smooth as possible and free from visible damage lines.

Therefore, it is clearly desirable to have a textile construction that is both self-tensioning in manufacture, and not vulnerable to pulled threads in finished form.

A major problem with projecting on a bobbinet weave is that the overall general pattern of threads or yarns creates a large scale grain or texture, which is the yarn arrangement of the cloth itself, made visible by the projected light landing on it. This is especially obvious when the imagery is white, so that a holographic projection of a woman in a white dress could be expected to show the grain quite clearly. This is unfortunate, because holographic images work best in light colours, white being otherwise ideal. The long, opposing diagonal paths of the bobbinet threads show up as fixed parallel diagonal lines in a huge crosshatch pattern, the regularity and linearity of which often stands out as a static and incongruously symmetrical element reminiscent of an unwanted watermark on top of the desired projection. This diminishes the image quality and limits the choice of ideal content to display, as this texture effect is more pronounced in certain types of images than others. The situation is further compounded if the projected image moves across the screen and the grain of the screen obviously does not move with the image, resulting in a flattening out of the desired 3D effect.

One practical solution is to place a viewing audience far enough away that this graining effect appears diminished, but for systems intended for business use in small offices, such as telepresence communication systems, or where close-up cameras are to be used, the typical 5m viewing distance required isn't possible and this effect will be seen.

Historically, real silver has been used to enhance projection screens; hence the term `silver screen', and silver can be advantageously incorporated in gauze projection screens also. Patent GB2512824A describes a holographic projection gauze made using entirely metallic-coated nylon threads in a bobbinet weave to improve the performance of traditional uncoated yarns for holographic projection. One of the features of a real silver-coated yarn is that it readily oxidises on exposure to air, resulting in a golden brown tarnish. This initially confers benefits when the yarn is used to form a gauze screen, because it reduces the shiny appearance of the silver in the gauze, rendering it less obvious to an observer. However, if the oxidation continues past this beneficial point, in time it reaches a discoloration such that images projected onto it are unacceptably dulled and noticeably browner, at which point the gauze is normally replaced.

Commercially available silver (Ag)-coated yarn is generally coated nylon, which is flammable, so in many commercial situations there is a requirement for flame-proofing before it can be used. Flame proofing may be incorporated in the manufacturing process, or be sprayed on post-manufacture, but either way it introduces extra cost and inconvenience in order to comply with safety regulations.

It would be of benefit to either produce an intrinsically flame retardant product, or combine the flame retardant properties of the spray process with another beneficial feature.

An intrinsic problem with front projecting on any kind of gauze screen is that a proportion of the light from the projector passes straight through the gauze. For example, in a bobbinet weave, the light from the projector will only illuminate the gauze where it hits a thread, and the passage of light is blocked. The rest of the projection will pass through the holes in a straight line, and illuminate the next surface it hits. This unavoidably creates a double image, often on a back wall of the space behind the main image. This double image is always larger and dimmer than the first image, being further away from the projector device; the relative size and brightness depends on how far behind the gauze screen the surface is, and the focal length of the lens used. This double image 'shadows' the main image, and when the two can be seen together, it can destroy any credibility of a projected image as a real and authentic entity, especially when the double image appears on the wall behind the main one, and they line up. Any fabric that goes transparent must therefore allow light to pass through it, so any fabric that has this characteristic exploited to make a holographic effect will have the disadvantage of a double image created by the projection device.

Unless there are artistic reasons for wanting otherwise, steps always need to be taken to manage the double image and may address its size, brightness and/or placement relative to the audience. Options include considering how the projector device and its lens are configured, where they are positioned, putting light-absorptive surfaces where the double image is going to land, and where possible designing the viewing experience to put the double image out of sight.

One existing technique is to angle the projector so that the double image falls where it cannot be seen, for example by placing the projector high up and having the double image land on the stage floor, avoiding the back wall behind the main image. However, the resultant main image on the gauze screen is heavily angled, and distortion (called 'keystoning') results; this gets worse the further from the centre of the main image the projector is positioned. Most high-end projectors have some on-board compensation software for this off-axis projector placement, but they are limited in scope, and the kind of extreme placement required to put the double image on the floor in a small space is likely to distort the image beyond redemption.

The shorter (i.e. wider-angled) the focal length of the lens deployed in the projector device, the larger and therefore dimmer the image will be when it hits the next surface, which is beneficial.

Where it is desirable that two or more people in remote locations can appear to both be present at the same meeting, telepresence conferencing technology exists that allows people to transmit images of themselves in real time which are viewed by the other party or parties. Visual as well as audio communication is possible. Systems now exist in which high quality video as well as audio can be transmitted in real time, so there is no noticeable delay. Skype (RTM) and other providers of similar technology have made this technology widely available for free, and, for a cost, full high definition 1920 x 1080 images (high resolution images) can reliably be streamed in real time, with time-synched audio.

It is beneficial that the resulting experience for all parties is as realistic as possible, with the ultimate goal of it appearing that the other participants are actually in the same room. Thus both locations operate simultaneously as a broadcast room and a receiving room in order to allow a bi-directional experience. Present systems do not provide for a realistic visual experience without intrusive equipment that detracts from the impression that other parties are really present. US200317492A describes one such system commercially available.

In order that the holographic subject appears to be communicating in an honest and open fashion, it is desirable that it appears that the parties are looking at each other when they speak, and are making eye contact. Many video conferencing systems such as Skype (RTM) use the built-in camera above the screen on a laptop to film the subjects in a video conversation. Therefore, if each party is looking at the other party on their screen, they both appear to be looking down. It is only by raising his eyes to look into the camera that a participant appears to make eye contact, but in doing this he can no longer see his own screen properly. Clearly a better camera position would be of benefit.

The present invention provides a gauze projection surface, a projection method and a background environment in which 3D holographic images can be created offering cost savings and visual improvements over any existing technology. It's scalable, so suitable for use in a variety of environments from very large concerts to small office spaces.

Particular prior art examples are disclosed in US4006965 and JP2006243453.
US4006965 discloses a screen comprising a fabric formed by weaving transparent fibre bundles thereinto and a metallic layer formed on the whole surface of one side of the fabric and having an optically high reflectability.
JP2006243453 discloses a screen which has a high gain in a wide angle of view and is constituted by using a void fibre which is constituted in such a manner that two mutually immiscible components of polymers A and B are blended and has voids inside, wherein 300 or more voids exist in the fibre cross-section perpendicular to the fibre axis direction.

Another knitted screen is disclosed in US5258870A.

### SUMMARY OF THE INVENTION

According to a first aspect of the present invention, there is provided a projection surface according to claim 1, wherein the surface is a semi-transparent gauze knitted projection surface comprising one or more yarns knitted to form a projection area, the arrangement being such that the yarn or at least one of the yarns is coated with a metal substance, wherein chains of knitted loops of yarn are interlinked to create a net construction with holes.

According to a second aspect of the present invention, there is provided a method according to claim 13 comprising knitting one or more yarns to form a semi-transparent gauze projection area, the yarn or at least one of the yarns being coated with a metal substance, and interlinking chains of knitted loops of yarn to create a net construction with holes.

Owing to these aspects, it is possible to produce a textile construction that is both self-tensioning in manufacture, and also not vulnerable to pulled threads in its finished form.

The metal substance is preferably real silver (chemical symbol Ag), and the coating is allowed to oxidise slightly in order that the shiny natural silver colour of the metal becomes dulled through tarnishing. Other metals to coat the yarns could also be used and which also oxidise on exposure to the atmosphere, for example aluminium and other similar metal substances.

The projection surface is particularly suitable for creating holographic imagery. The projection surface appears semi-transparent when lighting behind the surface is brighter than the lighting on a viewer's side.

The projection surface is designed so that light projected thereon and which hits the yarn or yarns will be reflected so as to form an image which an audience can see, the remaining light passing through the surface by way of pathways in the knitted construction. The pathways also permit the passage of light from a projector device creating further so-called double images on the next surface the emitted light hits.

In a first embodiment, the projection surface is a semi-transparent gauze screen comprising a warp-knitted textile made from two or more silver-coated yarns as opposed to a woven textile screen. The yarns may be of various thicknesses, however they will be very thin in order that they do not become too visible. Preferably the yarn is between 20 denier and 40 denier thick. This does not restrict the use of thicker or thinner yarns. Chains of knitted loops define holes in the surface which allow light projected thereon to pass though the net-like construction. The hole count is preferably 16 holes per inch for the warp direction, and 16 holes per inch for the in the weft direction. This does not restrict the use of a higher or lower hole count. The yarn thickness and hole count may vary according to the proximity of the audience, with finer yarns and more holes per inch preferable for closer viewing. Preferably, this fabric is able to be manufactured in widths in excess of 5m, however narrower widths are not excluded. In fact, of particular use would be of around 3 to around 5m wide and below that range for smaller installations. Preferably there are 2 or 3 yarns used, so a two-bar (2 yarns) or three-bar (3 yarns) construction is possible. However, this does not restrict the use of more yarns in the knitted structure. A three-bar construction in which the third yarn is a non-silver coated yarn would create a screen in which the silver coating was all on one side. This would give a screen with a distinct front and back, and would be cheaper to manufacture than a three-bar screen with 100% silver coated yarns. Adding the third bar endows the fabric with a more rigid construction than a comparable two bar.

In a second embodiment, not in accordance with the claimed invention, the projection surface is advantageously a semi-transparent gauze screen comprising a fine warp-knitted tulle-type textile made from two or more tarnished silver-coated yarns as opposed to a woven textile screen. The yarns may be of various thicknesses, however they will be very thin in order that they do not become too visible. Preferably the yarn is between 20 denier and 40 denier thick. This does not restrict the use of thicker or thinner yarns. There are no holes between the yarns in the gauze screen defined by chains of knitted loops, so the surface of the screen is smooth, but the fabric is very fine, so therefore translucent, and it still exhibits a double image as a result. Instead the screen is constructed from the yarns forming interlocking loops which follow a zigzagging vertical path to form a knitted tulle gauze projection screen, the interlocking loops defining pathways for light projected thereon to pass through the screen. Preferably this fabric is manufactured in widths in excess of 5m however narrower widths are not excluded. Preferably there are 2 or 3 yarns used, so a two-bar (2 yarns) or three-bar (3 yarns) construction is possible. However, this does not restrict the use of more yarns, and a projection surface can be created using a three bar construction with the third bar being a non-silver coated yarn as described above in respect of the first embodiment. In this way, a fine knitted fabric screen can be provided with almost no visible texture or grain from the fabric, which is useful for displaying high quality holographic projections for close-up viewing.

A warp knitted fabric is generally made under 6m wide, which is the maximum width of knitting machines. The machines knit the yarns into a greige (unfinished) fabric, and a secondary process called finishing turns the greige fabric into the final product. Although the knit comes off the machine at a given width, a careful design of a net gauze fabric means that the knit can be loose enough to include the holes required for a successful holographic gauze screen to be included as slack yarn. The fabric may therefore only be 5m wide when it is knitted, but the looseness in the knit allows the greige fabric to be pulled or stretched out to significantly greater width during the finishing stage, when the holes become their required size. This is desirable because a holographic gauze screen ideally needs to be available in widths up to 9m without seams. Bobbinet machines are able to make much wider cloths than knitting machines, and the structure of a bobbinet usually is not very stretchy. Hence it is not necessary to pull out bobbinets in finishing to the same degree as warp knits in order to achieve wide fabrics.

Finishing typically involves heating the fabric while stretching it out to set it at its final dimensions, and also includes adding any stiffeners, softeners, dyes, bleaches or other chemicals required to give a required colour, feel or other characteristics. Flame retardancy or anti tarnish substances can be added during the finishing process.

The use of real silver to coat the yarns gives a metallic component to the product which is highly reflective, thus making the projections relatively very bright. However, a bright and shiny silvery finish to the gauze is not desirable, because that would be highly visible to the audience. Therefore, the naturally shiny silver is exposed to air to oxidise it in order to gain a tarnish, which makes the yarns less shiny, and adds yellow or brown tones to the colour. This colour makes the screen very inconspicuous to an audience and it retains a remarkably high degree of reflective properties for direct projected light that make it still very effective for use as a projection surface. It is a considerably better projection medium for holographic use than non-silver coated gauzes; or other non-silver metallic threads; or gauzes incorporating silver-coloured, non-elemental silvery coatings or threads, which therefore do not tarnish.

The silver coating is typically onto a nylon yarn, and it may be applied either before or after the yarn is made into a fabric piece. Silver yarn is generally used for applications utilising its antibacterial or radiation-reflecting properties, so a shiny silver colour is not generally of value and is typically not preserved. The silver coating on the yarn will necessarily have experienced some degree of oxidisation by the time it is through the process of being made into a holographic screen, and this level of discolouration is ideal to make it highly fit for purpose.

The screen is optically transparent when an area behind it is illuminated, allowing an audience in front to see the lit background through it.

Different fibres may be used as a substrate for the silver coating in order that different characteristics may be introduced into the final fabric. Graphene, for example, may be incorporated for strength, or a flame retardant yarn such as polyester may be specified.

Preferably, the silver-coated gauze holographic screen is suspended substantially vertically and lightly tensioned around its edges such that the means of suspension are discreet, the gauze is not wrinkled, and a viewer cannot see the edges of it. A projector device may be mounted on the ceiling in front of the gauze and lighting used behind the gauze to make the parts of the gauze that are not projected on go transparent and disappear. The gauze is not lit from the front, other than by the projection, and therefore it is not obvious to a viewer that the gauze is present. The lighting behind the gauze is used to emphasise the 3D aspects of the background, giving a strong 3D context within which the 2D video projection is viewed on the near-invisible screen. Ideally these images are 'floating' - i.e. objects or people that are always completely contained inside the framing of the video so are surrounded by black, and are presented from a locked-off, stationary continuous single camera viewpoint. There is no background present in the projected image, only the isolated subject which appears to floating in empty space.

A person filmed in this way can be projected onto a holographic silver-coated gauze screen, which will appear solid where the image falls. Backlight behind the gauze makes a stage scene visible through the gauze, so it looks like a real person or other object is on stage.

A holographic image of a person or object is created by projecting a high quality video of the person or object onto a fine fabric screen

In this way, a telepresence system can be arranged in two or more locations remote from each other. People in these locations film themselves and broadcast high quality recordings of themselves in real time to the other location(s) via the internet or by other suitable communication means. The receiving party or parties use the invention to view the broadcasts in a specially designed room or studio that makes it appear as if the other party or parties are actually present, seated at the end of, for example, a boardroom-type table at which the other member of the meeting is physically seated.

The holographic viewing equipment for such a telepresence system comprises a small holographic gauze screen, a projector device fitted with an ultra-short throw lens, and lighting behind the gauze screen to give a 3D effect. The rooms at the other locations should have a similar arrangement, and the presentation makes it look like the broadcast party is present in the same room as the receiving party or parties. The gauze screen is positioned at a far end of the receiving party table, with the projector device mounted in front of it on the roof or ceiling. A void behind the gauze screen is blacked out with black drapes and carpet, and lights are positioned such that they can light the visible surfaces without placing light behind the image of a person projected onto the gauze screen, where it would make the image go transparent.

A filming arrangement captures images to broadcast to the receiving party or parties. The subject is filmed from a fixed camera against a black drape or other background, which disappears in the final broadcast, and makes the image appear to float. Lighting is arranged to light the face and features to make facial expressions and lip movements clearly visible, and a strong backlight is created around the subject in order that their outline is distinguished from the black background. This set-up can easily be achieved in a small room, studio or office, and is preferably erected as the background to a seated position opposite the viewing equipment. A small camera and microphone are arranged on the table in front of the subject.

As the participants are seated, it is only necessary to film the broadcast subject from the waist up while seated at a table. If the parties involved have similar tables it can appear that the video projection is a continuation of the real table in the receiving room when the image is projected adding to the authenticity of the experience. It is therefore desirable to include a portion of the table in the filmed content. This is not usual in holographic filming, which normally requires an image wholly contained within the video content, and partially filmed objects cut off by the framing of the camera shot are usually avoided. Thus, if both parties have substantially identical broadcast and receiving arrangements, they can each appear to the other as realistic virtual images. Commercially available systems enable synchronous audio to maintain lip-synch with the real-time video and deal with the echo cancellation required when microphones pick up broadcasted sound and try to send it back. Additional data streams can be broadcast alongside the recorded images, so that PowerPoint presentations, for example, or other supporting material can be transmitted as part of the package and viewed on additional screens.

In addition, the gauze screen can be pivotably mounted, so it can swing out of the way so the room can be used for other purposes when not required for holographic telepresence.

Preferably the gauze front projection screen is made from a fine fabric suitable for close viewing situations such as telepresence systems, however any gauze projection screen may be used.

One possible arrangement for managing an unwanted secondary image comprises first and second projector devices for projecting respective first and second image parts of a full image that is otherwise possible to project from a single projector but which would have an undesirable secondary image, the full image being made of the first and second image parts projected on to a semi-transparent projection screen, the arrangement being such that the screen reflects the full image to a viewer and allows light from the first and second projector devices to pass through and cast respective double image parts in an area on the opposite side of the screen than the first and second projector devices, the arrangement being such that the undesirable secondary images are at least reduced in impact than if only the single projector was used to create the full image.

Accordingly, the double image parts created by each of the projector devices are arranged to land in a place on the opposite side of the screen where they can be easily managed.

It may be desirable to use two or more projectors to project the full image, dividing the complete full image up between the projector devices in such a way that the double image created by each one lands in a place where it can be easily managed. Where it is difficult to manage a large double image from a single projector device, it may be preferable to divide the image between different projector devices located in different positions. A plurality of smaller secondary double images in a corresponding variety of placements may be more manageable. Reducing the size of individual double images is particularly useful to reduce the depth required between the gauze screen and a back wall surface, where the double image will otherwise fall.

It is advantageous that at least some of the constituent yarns or threads are treated with an anti-tarnishing agent and/or a flame retardant substance.

In this way, the screen can be fire-proofed and/or have the rate of tarnishing of the metal coating slowed to a desired degree.

The semi-transparent projection screen may also be treated with a resin substance which makes the screen less prone to mechanical damage.

The flame retardant substance may be in the form of a spray required to fireproof the finished gauze is combined with the anti-tarnishing agent to slow down the oxidation and discolouration of the screen.

Any soft goods on stage need to be appropriately certified flame retardant. One method involves spraying the screen with a flame retardant chemical substance that may also beneficially slow down or completely stop the oxidisation of a silver coating on the yarns, thus preserving the optical characteristics of the screen. A second method involves adding the chemicals necessary to give flame retardancy, and/or resistance to tarnishing and/or a resistance to the constituent yarns easily forming runs or pulls as part of the finishing process that the fabric goes through to turn the woven or knitted product into the final screen textile.

The anti-tarnishing agent, the resin which endows a resistance to runs and pulls and the flame proofing processes may also be applied separately or individually.

In one embodiment, the anti-tarnishing agent is a resin applied during the finishing process, when heat is applied to the knitted or woven screen to set it to the required width. This resin is preferably polyvinyl acetate or polyurethane-based, which will both protect the yarns from having contact with the air and add stiffness and body to the cloth. As a result, adding these or other chemicals with similar properties will slow down or completely eliminate further tarnishing of the yarns, and lock them together such that the fabric is no longer so vulnerable to pulls or runs in a weave.

It is not possible to obtain already tarnish-proofed yarn, and so it would be of great benefit to be able to add either during the fabric manufacture, or afterwards an agent that prevented or at least slowed down the oxidisation process in order to extend the useful life of the screen.

The resin substance is preferably a colourless resin substance especially when the constituent threads or yarns of the screen are metal-coated in such a way that the resin coats and defends the threads and thus the screen becomes more resistant to damage due to runs and pulls in the individual threads. For example, the resin substance may be polyvinyl acetate, polyurethane or other similar polymer resins.

Any treatment to the screen in relation to flame retardancy, anti-tarnishing or mechanical strength enhancement applies to substantially the whole screen.

A holographic telepresence system allowing two parties in remote locations to communicate can be provided comprising, at first and second locations, respective semi-transparent projection screens located between respective first and second viewers of the screens and respective first and second image-capturing devices, the arrangement being such that the screen at the first location has projected upon it an image of the viewer at the second location.

Advantageously, the screen at the second location has projected upon it the image of the viewer at the first location and the respective image capturing devices are located at substantially eye-level of the respective projected images. In this way, the viewer(s) involved can make eye contact with each other while looking at the image of the other viewer(s).

The image-capturing device is advantageously a camera. Thus, during use, each party will look down the camera lens when they look at the face of the other, and eye contact can appear to be made.

Advantageously the image capturing device is adjustably mounted so that the position can be altered for varying sizes of viewers.

The impact of an undesired double or secondary image formed behind a projected holographic-type image projected onto a semi-transparent screen, the presence of which causes the holographic-type image to go transparent and thereby compromising the realism of the effect, is reduced by coating surfaces where the secondary image falls with a light-absorbing material comprising carbon nanotubes.

Thus, the light-absorbing material may be deployed to neutralise any light source that may be problematic to a holographic image.

Preferably, the light-absorbing material is Vantablack(RTM).

### BRIEF DESCRIPTION OF THE DRAWINGS.

In order that the present inventive concepts can be clearly and completely disclosed, reference will now be made, by way of example only, to the accompanying drawings, in which:-
Figure 1 is a perspective view showing a projected image hitting a holographic gauze, and a double image created on a surface behind the gauze,
Figure 2 shows the structure of the yarns or threads of a knitted net gauze projection screen with holes,
Figure 3 shows the structure of the yarns or threads of a knitted tulle gauze projection screen without holes,
Figure 4 shows the structure of the yarns or threads of a bobbinet gauze projection screen not in accordance with the present invention,
Figure 5 is a plan view comparison between a 0.7:1 short throw lens and a 0.36:1 ultra-short throw lens,
Figures 6a and 6b show side views of respective arrangements of a projector fitted with a short throw lens and a projector fitted with an ultra-short throw lens in order that the double image lands on the floor of a stage,
Figure 7 is a schematic representation of a telepresence system,
Figure 8 shows a preferred version of the telepresence system, and
Figure 9 shows a side view of two projector devices combined to give a single image on a front projection gauze screen.

### DETAILED DESCRIPTION OF THE DRAWINGS

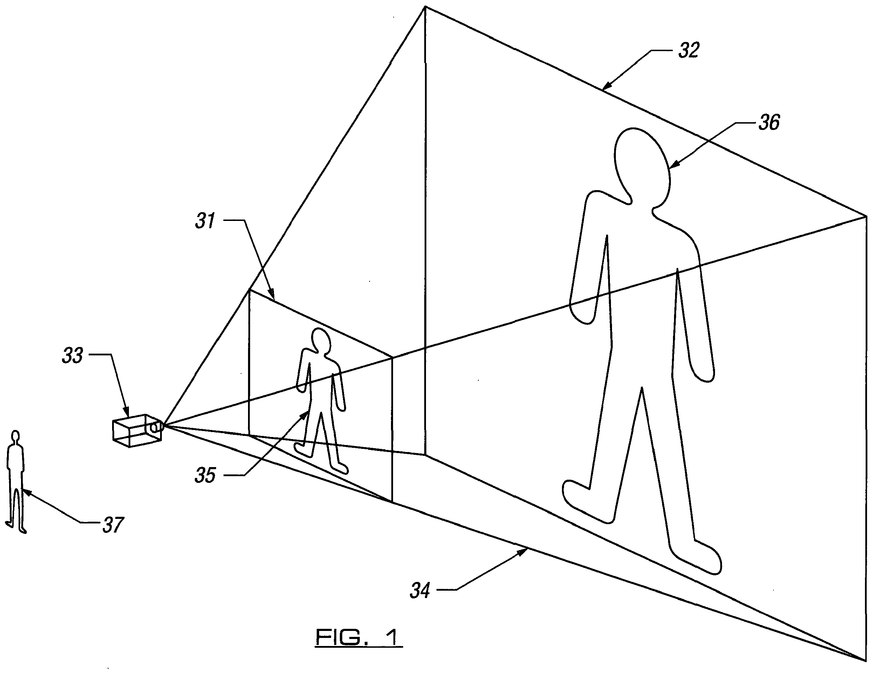

Referring to Figure 1, a projector device 33 projects an image onto a semi-transparent metal-coated gauze screen 31, wherein the metal is preferably silver and at least 50% of the yarns used to make the projection screen are preferably silver-coated. The main image of, in this case, a person 35 appears on the gauze screen. As the screen is optically semi-transparent, some of the light from the projector 33 continues through the gauze screen 31 and continues to travel in straight lines within a projection cone 34, forming a double image 36 on the next surface it hits. A solid wall 32 is some distance behind the gauze screen 31, and the double image 36 is seen here, larger and dimmer than the main image 35. A viewer 37 will find that the double image detracts from the realism of the holographic effect reflected from the gauze screen because it is always in his line of sight, and it duplicates the main image reflected from the gauze screen. Figure 1 illustrates the known fact that if you double the throw distance, a projected image will be one quarter as bright.

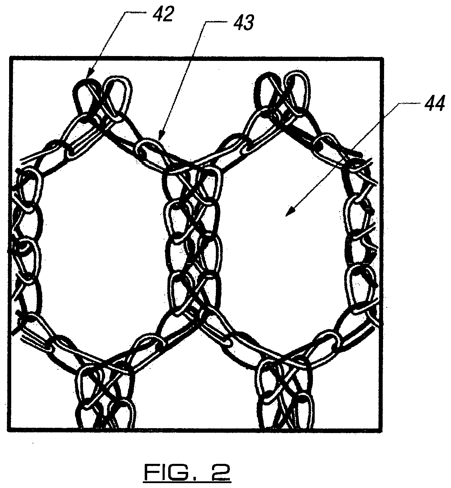

Figure 2 shows the looped chain structure of a warp knitted gauze screen in a net pattern. Two yarns 42, 43 loop through each other to create chains. Roughly hexagonal holes 44 are formed between the chains of yarn.

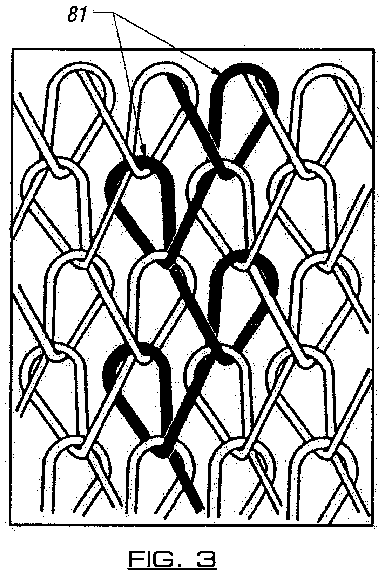

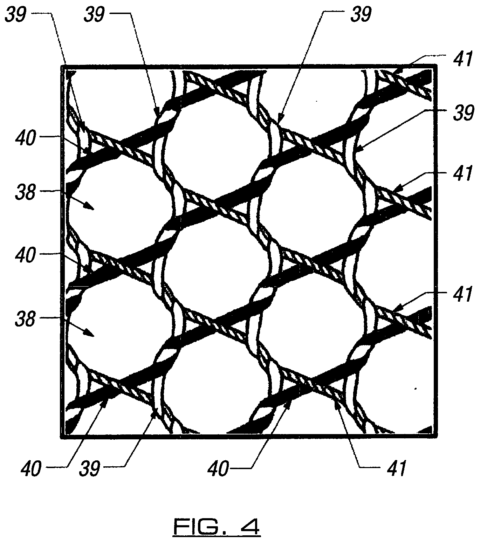

Figure 3 shows a different warp knit, in which the resultant fabric does not have the holes of the knitted structure of Figure 2, but the yarns 81 still form interlocking loops which follow a zigzagging vertical path. A warp knitted textile construction comprises a series of small interconnecting loops in which the yarn zigzags from side to side along the length of the fabric, following adjacent columns ("wales") of knitting, rather than creating a single row ("course") as is the case with weft knitting. By comparison, woven textiles consist of long runs of interlaced yarns (see Figure 4). Weaves and knits are created on different machines and have different functional properties as a result of their respective structures. Owing to the interlocking nature of the loops, warp knitted fabric is less prone to pulled threads, and it is self-tensioning in manufacture for a smooth surface result. In addition, it does not exhibit a long diagonal grain when projected on, simply because it does not have long diagonal thread paths. The grain, if seen at all, is relatively small and irregularly shaped, and does not impose a large or distracting pattern onto a projected content. The cloth can be manufactured in modern factories rather than on traditional, slow machines, so it is economical and fast to make. Advantageously, at least one fine yarn is knitted to create a fine, semi-transparent fabric in which the yarn is looped, but the loops are connected to each other across the width of the fabric and do not form chains or holes, and the open loops of fine yarn create the semi-transparent characteristic required.

In one embodiment, a warp knitted net construction holographic projection screen is preferably made from 100% silver(Ag)-coated yarn, in any width, preferably between 5m and 10m. Narrower or wider widths are not excluded. The warp knitted textile preferably has a hole count of 16 holes per inch in both the warp and weft direction, although the hole count may be higher or lower than this. The holes are preferably substantially hexagonal. Preferably the yarn is 20 denier, The coated yarns are not particularly specified, although nylon is preferred. Preferably a two-bar or three-bar knitted construction is used. The yarn may be thicker or thinner than this, the hole count may vary and the hole shape may also vary.

In a second embodiment, not in accordance with the claimed invention, a warp knitted tulle-type holographic projection screen is preferably made from 100% silver(Ag)-coated yarn, in any width, preferably between 5m and 10m. Narrower or wider widths are not excluded. The warp knitted textile, as illustrated in Figure 3, does not have the holes of the knitted structure of Figure 2. The yarn is preferably 30 denier. The coated yarns are not particularly specified, although nylon is preferred. Preferably a two-bar or three-bar construction is used and preferably it is a 28 gauge knit (so there are 28 needles per inch on the knitting machine). Preferably there are 40 courses (vertical columns of stitches) per inch. The yarn may be thicker or thinner than this, the machine may be other than 28 gauge and there may be more or fewer than 40 courses.

The knitted form of gauze screen provides for a more robust construction that is fit for purpose, and self-tensioning in manufacture for ensuring an even projection surface. The resultant texture of the gauze substantially reduces problematic grain effects in the projections. The second embodiment provides for a particularly fine projection surface that is suitable for close up viewing. However, as there are no holes in the fabric, it is difficult to manufacture this fabric in widths over 5m, because there is very little stretch in the fabric. This is not a problem for many applications such as use in an office telepresence system, because the width required would be under 5m.

The first embodiment allows for a fabric that can be made on 5m wide knitting machines, but allows for a loose construction owing to the presence of the holes that can be pulled out to more than 5m after the knitting process. The holes make it an inferior close-up viewing experience compared to the tulle-type knit, but the larger scale of a wide screen makes it more likely that it will be viewed by an audience some distance away, who won't be able to see any imperfections in the grain or texture of the screen.

Stretching after knitting achieves a fabric width wider than the knitting machine the fabric was constructed on. Preferably but not essentially the fabric is 4m or wider when it is finished.

Figure 4 shows the very different structure of a bobbinet weave, not in accordance with the claimed invention. Static warp yarns 39 are set vertically, and the two sets of bobbin yarns 40, 41 are woven between the warp yarns 39 on bobbins at diagonals. The yarns twist together where they cross making a characteristic hexagonal weave with holes 38 between the yarns. The diagonal path of the bobbin yarns 40, 41 can be clearly seen.

The two bobbin yarns 40, 41 may be metal-coated and the warp yarns 39 not metal-coated so as to result in a relatively cost-effective woven bobbinet textile.

Advantageously, the bobbinet weave for a gauze projection screen is made from three yarns. Preferably, this gauze projection screen has a hole count of 16 holes per inch in the length, and a hole size of 1.5mm. The aforementioned twists cover and hide a significant proportion of the warp yarns 39, making the warp yarn the least visible of the three. The two bobbin yarns 40, 41 can be a tarnished silver-coated yarn preferably 40 denier, however thicker or thinner yarns may be used, and the final hole size, hole count and hole shape may vary.

The warp yarns 39 may be of a different fibre which is not silver-coated, specified to bring additional technical or cost benefits to the finished gauze. In one version, the warp yarn is completely flame retardant, improving the overall intrinsic fire rating of the finished product. Preferably this is a polyester yarn. This reduces the need for the sprays that would be needed if all the yarns were silver-coated nylon, which is inflammable. Water-based flame retardant sprays wash off in the rain or when cleaned, so any intrinsic improvement in fireproofing improves safety if the product is going to get wet. In another version, the warp yarns are made of a cheaper yarn of superior strength. Silver-coated yarn is very expensive, so significant manufacturing cost reductions and material benefits can be realised using a cheaper yet stronger yarn. Preferably this yarn is 30 denier monofil nylon, however other thinner or thicker yarns or alternative fibre types may be specified.

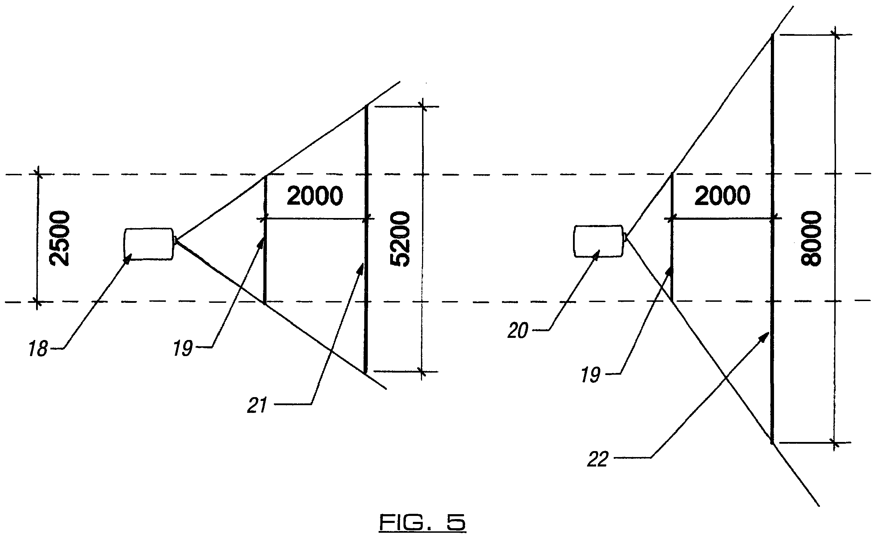

Referring to Figure 5, a 16;9 aspect ratio projector device 18 fitted with a typical 0.7:1 short throw lens is arranged to project an image 2.5m wide onto semi-transparent gauze projection screen 19. However, some of the light continues through the projection gauze screen 19 to form a double image 21 on a solid wall located 2m behind gauze projection screen 19. The double image 21 is 5.2m wide x 2.9m high, so the area covered by the double image is 15.1 sq m. By comparison projector device 20 is fitted with a 0.36:1 ultra-short throw lens also projects onto the 2.5m wide gauze projection screen 19 and the resulting double image 22 created on the solid wall 2m behind the gauze projection screen 19 is 8m wide x 4.5m high, with an area of 36 sq m. The comparison between the two lenses shows that, unless the back wall is a long way behind the gauze, a traditional short-throw lens (of the order of 0.8:1) will still make a double image that is sufficiently bright and of a size and in a position behind the main image such that it is unacceptably distracting.

Therefore, if both projector devices 18 and 20 are outputting the same brightness of image, the double image on the back wall from projector device 20 with the ultra-short throw lens will have over twice the area, and less than half the brightness of the double image coming from projector device 18, and will therefore be much less noticeable to a viewing audience and less troublesome as a result. Note that for clarity both images are shown emerging straight from the projector without being bounced off a mirror.

The projector device 20 is located on the same side of the screen 19 as a viewer, wherein the projector device includes an ultra-short throw lens. In this way, management of the unwanted appearance of the double image is enhanced. An ultra-short throw lens is one which has a throw ratio of 0.5:1 or shorter.

It is desirable that the double image is as dim as possible, and that it is not visually associated with the main image when viewed by the viewing audience, i.e. it is beneficial that they don't appear to line up. It will be understood that the worst place for a double image to appear is on the back wall of a display, where it obviously duplicates the main projected image, and is in the line of sight of a viewer watching the main projected image.

Doubling the throw of any given projection makes the image four times the size and a quarter as bright. It is advantageous to use a lens with a very short throw where a second image arising from light through gauze is an issue, as you can double the throw of the projector in a relatively short distance, thereby being able to achieve a significant fall-off of light in a shallow space.

Dimming down the double image vastly reduces its visual impact, and the enlargement further breaks any visual connection between the main image and its double, so the shadowing is less obvious. There is a further unexpected benefit, in that if the double image is directed onto a black floor, it looks like the reflection of the holographic entity in a shiny floor, thus adding to the realism of the illusion because the virtual image is perceived as having a physical effect on the real world.

A suitable projector device would be a professional high-definition projector device, such as those available from Panasonic for example, with a Panasonic (RTM) D75LE90 lens having a throw ratio of 0.36:1. The required throw distance for a holographic image 2.8m high is 1.8m from the gauze screen. If the back wall was 1.8m behind the gauze, the double image appearing on it would be four times the size and a quarter as bright as the main image. That brightness could then be further mitigated using black drapes or other light-absorbing surfaces. Ultra-short throw lenses typically bounce the image using an external mirror so that the body length of the projector device is utilised to increase the throw distance. Therefore, the projected image emerges from the device at an angle, so these projector devices have to be deployed off axis, which means that a projector placed high up can create an image lower down, and the projector device is not obvious to the viewing audience. The inclined light path from a high up projector device onto the lower screen means that from the viewer's perspective, the double image does not line up with the primary image, so it's not so obvious that it's the same; the angle means it's easy to throw it into onto the floor.

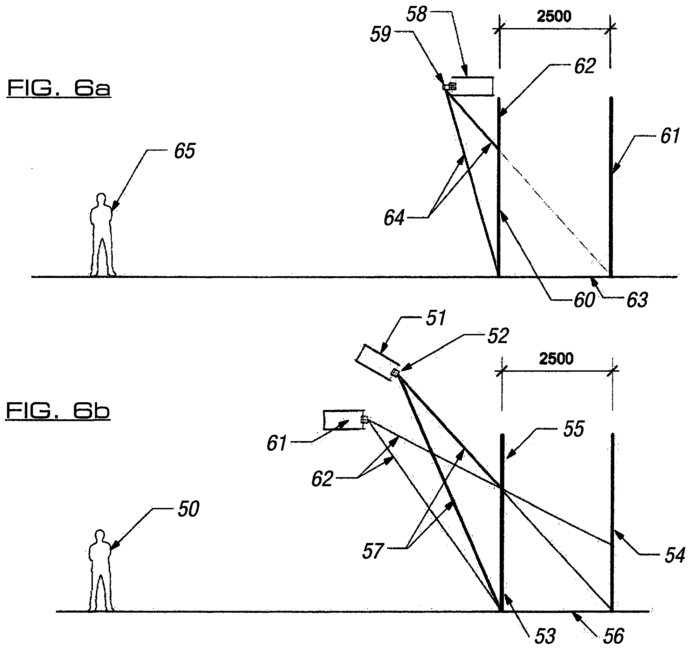

Referring to Figures 6a and 6b, Figure 6a shows a projector device 58 including an ultra-short throw lens 59 with a throw ratio of 0.36:1 positioned above a 4m high semi-transparent gauze projection screen 62, and an image 60 is projected onto the lower part of the screen 62. The image 60 is 3m high. The projection cone 64 is the path of the light leaving the projector, so therefore contains the image. Some of the projected light passes straight through the gauze projection screen 62 and forms a double image 63 on the floor on the opposite side of the gauze screen to a viewer 65. The double image 63 will fall completely in the space behind the gauze 62 if there is at least 2.5m of clear space behind the gauze projection screen 60. The viewer 65 will perceive the double image 63 as if it is a reflection of the main image 60 in a shiny floor; this enhances the realism of the main image 60. It can be seen that the projection cone 64 emits from the rear of the projector device 58 and passes back over the length of the projector device 58 in order that the length of projector 58 can be used as part of the throw distance. It can be seen that this means that the projector cannot be on a straight line with the image, and the projector device 58 must always be completely above or completely below the projected image in order that the projection cone 64 can clear the body of the projector device 58. This off-axis projection makes it much easier to dump the double image 63 onto the floor or ceiling, with no distortion to the main image 60.

By contrast, Figure 6b shows a second identical projector device 51 is fitted with standard short throw lens 52 with a throw of 0.70:1. The projector device 51 projects a 3m high image 53 onto a gauze projection screen 55. There is a solid wall 54 located 2.5m behind the screen 55. The projection cone 57 shows the path of the projected light as it hits the projection screen 55. Some of the projected light passes through the gauze screen 55 to form a double image 56. In order that double image 56 is desirably contained on the floor and does not fall on the back wall 54 where it might be seen, the projector device 51 has to be angled downwardly (two separate positions of the projector device 51 being shown in Figure 6b), and the image 53 will thus suffer distortion owing to the excessive key-stoning effect. Standard on-axis lenses such as lens 52 ideally need to be arranged in the same horizontal plane as some part of the image 53 in order for the image 53 not to suffer distortion.

Due to the longer distance required by lens 52 compared with lens 59 (of the projector device 58 of Figure 6a) to get the same size image, the projector device 51 has to be rigged higher up than projector device 58, so a higher ceiling height is needed with the 0.7:1 lens 52 of Figure 6b than with the 0.36:1 lens 59 of Figure 6a. The longer throw may alternatively be achieved for projector device 51 by placing it at the same height as the projector device 58 and moving it further away from the gauze screen 55, as shown by the position of the projector device 61. This may be necessary if there is not enough ceiling height to elevate the projector any further. It can be seen from the projection cone 62 of projector 61 that the double image will appear on the back wall 54, where it would be visually distracting for the viewer 65 and detract from the realism of the main image 53. It can be understood that this arrangement can be rotated if required to place the double image on the ceiling using a floor mounted projector devices, or alternatively put the double image to the left or right of the main image.

In Figure 6a, the projector device is a high output 3-chip device such as a professional Panasonic PT-DZ16K fitted with the Panasonic D75LE90 ultra-short throw lens with a throw ratio 0f 0.36:1. The projector is located 4.2m in above a stage and an image 5m wide x 2.8m high is projected onto a gauze projection screen. The double image will fall completely onto the floor if the back wall is more than 2.5m behind the gauze. Ordinarily a distance of at least 2.5m is required to give a good 3D effect, so this is a desirable outcome. This combination of projectors and lenses deployed in this manner creates an image which is completely in focus and does not suffer keystoning. By contrast, the similar projector device of Figure 6b fitted with the standard short throw lens D75LE50 with a throw of 0.70:1 will need to be 5.4m above the stage and angled down in order that the double image falls into a space 2.5m deep between the projection gauze and the back wall. In order to achieve this, the projected output is 60 degrees off axis (i.e. the centre of the image is 60° below a horizontal at the level of the projector lens), and the resultant image suffers considerable distortion due to keystoning as a result.

Alternatively, a Panasonic PT-DZ16K may be fitted with the Panasonic D75LE90 lens, positioned with the lens 1.8m from a holographic gauze. The primary image size is 5m x 2.8m. By the time the double image hits a wall 1.8m behind the projection gauze, it will be four times the size and a quarter as bright as the main image.

It is desirable that the double image is mitigated as far as possible by the scenic materials used behind the gauze. The use of light is important in order to illuminate these elements and make the gauze go transparent. However, it is desirable that the surface that the double image falls on is as light absorptive as possible, and also that the area directly behind the main projected image is also as dark as possible in order that the images themselves do not go transparent. Hence lighting is carefully placed to emphasise the three-dimensional characteristics of the space behind the gauze without placing light where it may make the images go transparent from any given audience viewpoint. Lighting may additionally be deployed in areas where a double image is visible, thereby wiping it out. This is a highly skilled process.

The position in which the double image may appear may be fitted with matt black curtains, carpet or painted surfaces. These areas can include a light-absorbing coating such as Vantablack(RTM). Vantablack comprises carbon nanotubes, which absorb over 99% of visible light. This means that on-axis projection can be used and there is no problematic double imaging, no matter where the projector is placed or which lens is used. Where drapes are used, they are preferably, but not essentially, folded or pleated, adding 3D textures into the background and making interesting surfaces for lighting.

Vantablack (RTM) may also be deployed to neutralise any other lightsource that may be problematic to any holographic image. A hologram is made of light, so when viewed in front of another light source or lit object, it goes transparent to the detriment of the quality of the holographic image. Surfaces that can appear on any viewing angle behind the holographic image can be coated with Vantablack (RTM) in order that they do not go transparent. This technique applies to both gauze projection holograms and Pepper's Ghost holograms, which are created by reflecting a video projection in a transparent, reflective medium placed at 45 degrees to the video projection screen. Patent US5865519A discloses a hologram method and apparatus of this type.

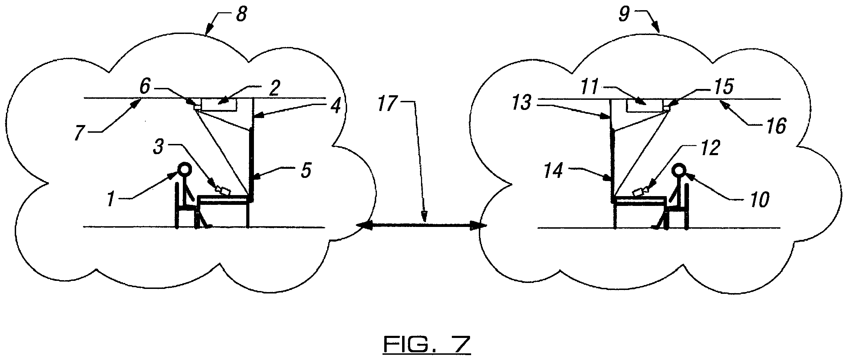

Referring to Figure 7, a holographic video telepresence system is shown in which a first person 1 in a first location 8 is filmed with a first camera 3. The video captured by the first camera 3 of the person 1 is transmitted by a wired or wireless link 17 to a first projector device 11 in a second location 9 mounted on a roof or ceiling 16. The first projector device 11 projects an image 14 of the person 1 onto a first front projection gauze screen 13 where it can be viewed by a second person 10 in real time. At the same time, the second person 10 is filmed by a second camera 12 and the video captured by the second camera 12 of the second person 10 is transmitted by a wired or wireless link 17 to a second projector device 2 in the first location 8. The second projector device 2 is also mounted on a roof or ceiling 7 at the first location 8 and projects an image 5 of the second person 10 onto a second front projection gauze screen 4 where it can be viewed by the first person 1 in real time. The second projector device 2 uses an ultra-short throw lens 6 to create the projected image 5. Similarly, the projector device 11 also uses an ultra-short throw lens 15 to create the projected image 14.

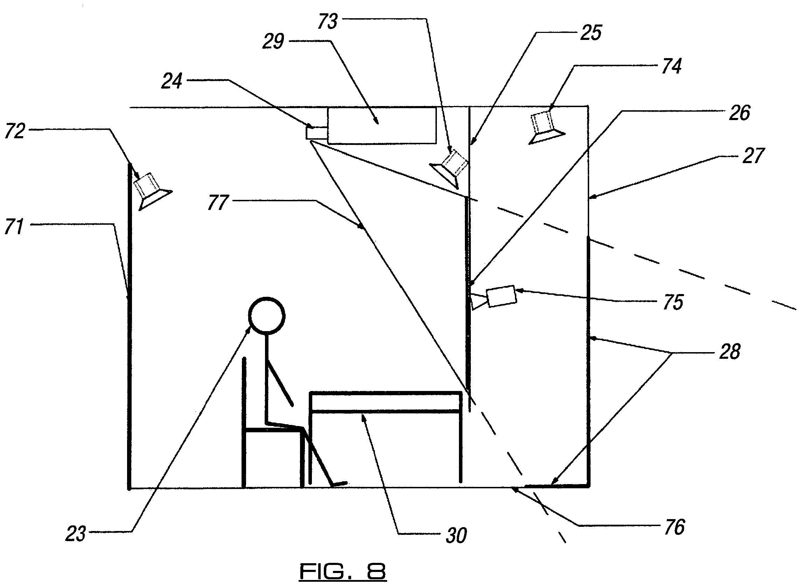

Referring to Figure 8, a preferred telepresence system is shown in which a viewer 23 sees a live broadcast image 26 of a remotely located party projected onto a silver-coated gauze projection screen 25 by a projector device 29 fitted with an ultra-short throw lens 24. The viewer 23 is seated at a table or desk 30 the rear edge region of which is in close proximity to or even in contact with the bottom edge region of the projection gauze screen 25. The image 26 is of the remote party, seated at a desk or table identical to table 30. The light from the projector device 29 creates the image 26 on the front projection gauze screen 25, which appears solid where the image 26 is formed. A back wall 27 located a distance behind the gauze screen 25 is black, and lit by a light 74. The back wall 27 can be seen because the gauze screen 25 will go transparent where the back wall 27 is lit by the light 74. The image 26 of the remote party is framed to include a small amount of the table at the remote location, so the table 30 appears to continue in the virtual image 26, in a place where in fact table 30 does not exist. The remote party appears to be seated at the end of the virtual table, in the space between the table 30 and the back wall 27, and therefore seems to be seated at the same table as the viewer 23. A double image 28 is created on the black back wall 27 and on the floor 76 because some light passes straight through the front projection gauze 25. By the time the double image 28 lands on the back wall 27 and the floor 76, it is so large that much of it is blocked from view by the desk 30. Double image 28 is not distracting because it is relatively dim, it is much larger than the image 26 and so does not appear to relate to it, and because back wall 27 is black, which makes the double image 28 harder to see for the viewer 23. The light 74 on the back wall 27 helps to wipe out the faint remains of the double image 28. Preferably compact projectors of the order of 4000 to 6500 ANSI lumen output are deployed, preferably laser projectors which are very low maintenance, such as a Panasonic PT-RZ670, fitted with the Panasonic ultra-short throw lens ET-DLE030. The projector may be brighter or dimmer than this, and may use other light-sources than a laser; other short throw or ultra-short throw lenses may be used.

A camera 75 will film the viewer 23 and send the image to the remote location, where an identical set-up will receive the images. The camera 75 is small and discreet, and is located either in front of or immediately behind the gauze screen 25 where the face of the remotely located party appears in the image 26. The camera is advantageously painted with a light-absorbing material to minimise its visibility when hit with the projections from the projector device 29. This may be matt black paint or preferably Vantablack (RTM). The camera 75 films the viewer 23 against a black background 71. Viewer 23 is lit from the front with one or more lights 25 to illuminate their face, and from the back and sides with one or more lights 72, which gives them a lit outline to give separation between them and the black background 71. These lights may be traditional tungsten lights, discharge (arc) lights or LED lights. When projected by a projector device similar to the projector device 29, the black background disappears, leaving the floating image of the viewer 23, which is broadcast back to the remote location, where the viewer 23 will appear as a holographic image in a set-up substantially identical to their own. Audio content transmission has been omitted here for clarity, but it will be understood that audio content is recorded via a microphone at the broadcast end and is played back via speakers at the viewing end.

Further locations may be added, such that the participant at any additional location can view one or more of the other locations.

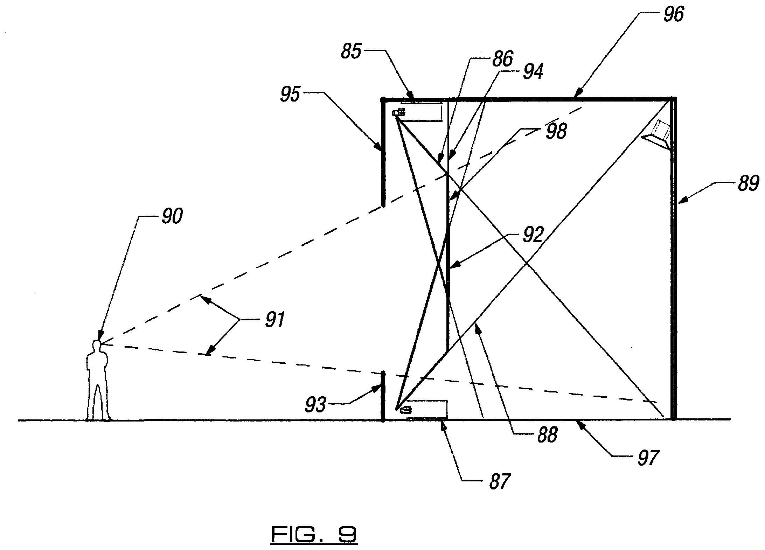

Referring to Figure 9, two or more projector devices may be arranged in combination to create a single blended full image that allows for the double images to be positioned away from the back wall where they would otherwise be distracting to a viewer. A first projector device 85 projects a top half part of an image 98 onto a semi-transparent gauze projection screen 94. A second projector device 87 projects the bottom half part of the full image 98 onto the same projection screen 94, which is hung substantially vertically from the ceiling 96 of a space. The two image parts overlap and blend together in the middle at a region 92 to create the single seamless image. A viewer 90 views the image 98 along sightlines 91, seeing the image 98 against a back wall 89 of the space. The impact of the image 98 would be adversely affected when viewed by viewer 90 if there was a double image on the back wall 89.

A projection cone 88 from the projector device 87 determines the location of a double image that lands on the ceiling 96, and a projection cone 86 from projector 85 determines a double image that lands on a floor 97. Means of masking 93 at floor level prevents the viewer 90 from seeing the projector device 87 or the double image from projector device 85, and means of masking 95 towards the ceiling hides the projector device 85 and most of the double image from the projector device 87, without restricting the view of the image 98. This technique is very useful in order to achieve a large image in a space where there is not enough depth between the gauze projection screen and the back wall to place the double image on the floor or on the ceiling if only a single projector device is used.

For example, a knitted gauze screen made of silver-coated yarn may be suspended in a space with a Panasonic PT-DZ21K high output projector device equipped with a first ET-D75LE90 ultra-short throw lens positioned immediately in front of it. A second Panasonic PT-DZ21K professional projector equipped with a second ET-D75LE90 is placed in front of the gauze screen on the floor. The ceiling projector device projects onto the gauze the top half part of a video clip showing a life size woman singing; the floor projector device projects the bottom half part of the same clip. The two halves are blended together using on-board geometry blending software in the projector devices to make a single full image. The background in the video is black, i.e. there is no background. Behind the gauze screen is a black curtain, preferably, but not essentially, hung so that there are folds and creases in it. A light source is positioned above and around the curtain and in the space between the gauze screen and the curtain, and these light sources illuminate the areas that appear from the audience to be surrounding the singer. The floor is matt black. The double image from the ceiling projector device falls entirely onto the black carpet on the floor, where it enhances the 3D qualities of the image by making it look like a reflection in a shiny floor. The double image from the floor projector device hits the ceiling. The image is very dim and does not obviously arise from the main image, so the audience aren't really aware of it, but light sources located in the ceiling can put additional light over it so it disappears completely.

The purpose of using more than one projector to make a full image is that the resultant full image manages the problematic secondary image much better than using a single projector. This process is to be distinguished from a projection made using multiple projectors simply because a single projector can't make a big enough image. In fact, things are made more difficult by using two projector devices to over come a visual problem, rather than the simple technical necessity to use more devices to cover more area.

The present invention improves a holographic 3D effect by better management of the inevitable double image.

The present invention provides for methods of improving the lifespan of a holographic projection gauze screen, and for integrating tarnish resistance and improved robustness into the basic design of the screen, or into beneficial additions to the manufacturing process.

By using a gauze screen in which not all of the constituent yarns or threads are metal-coated (which can apply to all of the screens described herein) particular characteristics and/or cost savings can be bestowed to the screen.

The present invention provides for a high quality, compact, bi-directional holographic telepresence system at a relatively low cost for business and entertainment use. It allows a camera to be positioned in such a way that a natural eye contact is possible between the two parties.

## Claims

1. A knitted projection surface (4, 13, 31) comprising one or more yarns (42, 43; 81) knitted to form a projection area, the arrangement being such that the yarn or at least one of the yarns (42, 43; 81) is coated with a metal substance, wherein chains of knitted loops of yarn are interlinked to create a net construction with holes (44), **characterized in that** the projection surface is a semi-transparent gauze that allows a background to be seen through it.

2. A projection surface according to claim 1, wherein the holes define pathways which allow light to pass through the net construction so as to appear semi-transparent when the lighting behind the surface (31) is brighter than the lighting on a viewer's side.

3. A projection surface according to claim 1 or 2, wherein the yarn or the yarns (42, 43; 81) are warp knitted to form the projection surface (31).

4. A projection surface according to any preceding claim, wherein the or each yarn (42, 43) is 40 denier silver-coated nylon yarn.

5. A projection surface according to any preceding claim, wherein the holes (44) in the knitted structure are between 0.5mm and 2mm in diameter.

6. A combination comprising a projection surface according to any preceding claim, and a first projector device (85) for location on the same side of the projection surface as a viewer (90), wherein the projector device includes an ultra-short throw lens.

7. A combination according to claim 6, and further comprising a second projector device (87), the first and second projector devices (85, 87) arranged to project respective first and second image parts of a full image (98) made of the first and second image parts onto the projection surface (31), the surface reflecting the full image (98) to a viewer and allowing light from the first and second projector devices (85, 87) to pass through the net construction and cast respective secondary image parts in an area on the opposite side of the surface (31) than the first and second projector devices (85, 87).

8. A projection surface or a combination according to any preceding claim, wherein the one or more yarns (42, 43; 81) have been treated with an anti-tarnishing agent.

9. A projection surface or a combination according to claim 8, wherein the one or more yarns (42, 43; 81) have been treated with a coating that is both flame retardant and anti-tarnish.

10. A projection surface or a combination according to any preceding claim, wherein the one or more yarns (42, 43; 81) have been treated with a polyvinyl acetate or polyurethane-based resin substance.

11. A system comprising a projection surface, or a combination according to any preceding claim, further comprising a second projection surface (31) and first and second image-capturing devices (3, 12), wherein said first mentioned projection surface is for placing at a first location (8), and said second projection surface (31) for placing at a second location (9), the first mentioned projection surface and the second projection surface being for location between respective first and second viewers (1, 10) of the surfaces (31) and said respective first and second image-capturing devices (3, 12), the arrangement being such that the projection surface (4) at the first location (8) is for projection upon it an image (5) of the viewer (10) at the second location (9), and the projection surface (13) at the second location (9) is for projection upon it an image (14) of the viewer (1) at the first location (8).

12. A system according to claim 11, wherein one or both of the respective image capturing devices (3, 12) are for location at substantially eye-level of the respective projected image(s) (5, 14).

13. A method comprising knitting one or more yarns to form a projection area, the yarn or at least one of the yarns (42, 43; 81) being coated with a metal substance, and interlinking chains of knitted loops of the yarn to create a net construction with holes (44), **characterized in that** the projection area is a semi-transparent gauze that allows a background to be seen through it.

14. A method according to claim 13, wherein the holes define pathways which allow light to pass through the net construction so as to appear semi-transparent when the lighting behind the surface (31) is brighter than the lighting on a viewer's side.

## Patentansprüche

1. Eine gestrickte Projektionsoberfläche (4, 13, 31), die aus einem oder mehreren Garnen (42, 43; 81) besteht, die so gestrickt sind, dass sie eine Projektionsfläche bilden, wobei die Anordnung so gestaltet ist, dass das Garn oder mindestens eines der Garne (42, 43; 81) mit einer metallischen Substanz beschichtet ist, wobei die Ketten gestrickter Garnschlaufen miteinander verbunden sind, dass sie eine Netzkonstruktion mit Löchern (44) bilden, die **dadurch gekennzeichnet ist, dass** die Projektionsoberfläche eine halbtransparente Gaze ist, durch die ein Hintergrund gesehen werden kann.

2. Eine Projektionsoberfläche gemäß Anspruch 1, wobei die Löcher Bahnen definieren, die Licht durch die Netzkonstruktion dringen lassen, sodass sie halbtransparent erscheint, wenn die Beleuchtung hinter der Oberfläche (31) heller ist als die Beleuchtung auf der Seite eines Betrachters.

3. Eine Projektionsoberfläche gemäß Anspruch 1 oder 2, wobei das Garn oder die Garne (42, 43; 81) gewirkt werden, um eine Projektionsoberfläche zu bilden (31).

4. Eine Projektionsoberfläche gemäß einem vorhergehenden Anspruch, wobei das oder jedes Garn (42, 43) ein 40 Denier mit Silber beschichtetes Nylongarn ist.

5. Eine Projektionsoberfläche gemäß einem vorhergehenden Anspruch, wobei die Löcher (44) in der gestrickten Struktur einen Durchmesser von 0,5 mm bis 2 mm haben.

6. Eine Kombination bestehend aus einer Projektionsoberfläche gemäß einem vorhergehenden Anspruch und einer ersten Projektionsvorrichtung (85) zur Platzierung auf der gleichen Seite der Projektionsoberfläche wie der Betrachter (90), wobei die Projektionsvorrichtung ein Ultra-Kurzdistanz-Objektiv enthält.

7. Eine Kombination gemäß Anspruch 6 und darüber hinaus bestehend aus einer zweiten Projektionsvorrichtung (87), wobei die erste und die zweite Projektionsvorrichtung (85, 87) so angeordnet sind, um entsprechende erste und zweite Bildbestandteile eines aus den ersten und zweiten Bildbestandteilen bestehenden Gesamtbildes (98) auf die Projektionsoberfläche (31) zu projizieren, die Oberfläche das Gesamtbild (98) an einen Betrachter reflektiert und das Licht von der ersten und zweiten Projektionsvorrichtung (85, 87) die Netzkonstruktion durchdringen und entsprechende Sekundärbildteile auf einen Bereich auf der gegenüberliegenden Seite der Oberfläche (31) werfen kann als die erste und zweite Projektionsvorrichtung (85, 87).

8. Eine Projektionsoberfläche oder eine Kombination gemäß einem vorhergehenden Anspruch, wobei das eine Garn oder mehrere Garne (42, 43; 81) mit einem Anlaufschutzmittel behandelt wurden.

9. Eine Projektionsoberfläche oder eine Kombination gemäß Anspruch 8, wobei das eine Garn oder mehrere Garne (42, 43; 81) mit einer Beschichtung behandelt wurden, die sowohl flammhemmend als auch anlaufhemmend ist.

10. Eine Projektionsoberfläche oder eine Kombination gemäß einem vorhergehenden Anspruch, wobei das eine Garn oder mehrere Garne (42, 43; 81) mit einer Harzsubstanz auf Polyvinylacetat- oder Polyurethanbasis behandelt wurde(n).

11. Ein System bestehend aus einer Projektionsoberfläche oder einer Kombination gemäß einem vorhergehenden Anspruch, darüber hinaus bestehend aus einer zweiten Projektionsoberfläche (31) und einer ersten und zweiten bilderfassenden Vorrichtung (3, 12), wobei die erstgenannte Projektionsoberfläche zur Platzierung an einem ersten Standort (8) und die vorgenannte zweite Projektionsoberfläche (31) zur Platzierung an einem zweiten Standort (9) bestimmt ist, die erstgenannte Projektionsoberfläche und die zweitgenannte Projektionsoberfläche zur Platzierung zwischen dem entsprechenden ersten und zweiten Betrachter (1, 10) der Oberflächen (31) und der entsprechenden erstgenannten und zweitgenannten Bilderfassungsvorrichtung (3, 12) bestimmt sind, die so angeordnet sind, dass auf der Projektionsoberfläche (4) am ersten Standort (8) ein Bild (5) des Betrachters (10) am zweiten Standort (9) projiziert werden soll und auf der Projektionsoberfläche (13) am zweiten Standort (9) ein Bild (14) des Betrachters (1) am ersten Standort (8) projiziert werden soll.

12. Ein System gemäß Anspruch 11, wobei eine oder beide der entsprechenden Bilderfassungsvorrichtungen (3, 12) so platziert werden sollen, dass sie sich im Wesentlichen auf Augenhöhe des/der entsprechenden projizierten Bild(er) (5, 14) befinden.

13. Ein Verfahren, das das Stricken eines oder mehrerer Garne zur Bildung einer Projektionsfläche umfasst, das Garn oder mindestens eines der Garne (42, 43; 81) mit einer metallischen Substanz beschichtet ist und ineinandergreifende Ketten aus gewirkten Schlingen des Garns eine eine Netzkonstruktion mit Löchern (44) schaffen, die **dadurch gekennzeichnet ist, dass** die Projektionsoberfläche eine halbtransparente Gaze ist, durch die ein Hintergrund gesehen werden kann.

14. Ein Verfahren gemäß Anspruch 13, wobei die Löcher Bahnen definieren, die zulassen, dass Licht die Netzkonstruktion durchdringen kann, sodass es halbtransparent erscheint, wenn das Licht hinter der Oberfläche (31) heller als das Licht auf der Seite des Betrachters ist.

## Revendications

1. Surface de projection tricotée (4, 13, 31) comprenant un ou plusieurs fils (42, 43 ; 81) tricotés de manière à former une zone de projection, la disposition étant telle que le fil ou au moins l'un des fils (42, 43 ; 81) est revêtu d'une substance métallique et dans laquelle des chaînes de boucles tricotées de fil sont liées les unes aux autres afin de créer un maillage doté de trous (44), **caractérisée en ce que** la surface de projection est une gaze semi-transparente faisant voir un arrière-plan situé derrière ladite surface.

2. Surface de projection selon la revendication 1, dans laquelle les trous définissent des chemins permettant à la lumière de traverser le maillage de manière à le faire paraître semi-transparent lorsque l'éclairage derrière la surface (31) est plus intense que l'éclairage sur le côté d'un spectateur.

3. Surface de projection selon la revendication 1 ou 2 dans laquelle le ou les fils (42, 43 ; 81) sont tricotés à mailles jetées pour former la surface de projection (31).

4. Surface de projection selon l'une quelconque des revendications précédentes dans laquelle le ou chaque fil (42, 43) est un fil nylon 40-denier recouvert d'argent.

5. Surface de projection selon l'une quelconque des revendications précédentes dans laquelle les trous (44) dans le maillage ont un diamètre situé entre 0,5 mm et 2 mm.

6. Ensemble comprenant une surface de projection selon l'une quelconque des revendications précédentes, un premier dispositif de projection (85) devant être situé sur le même côté de la surface de projection qu'un spectateur (90), dans lequel l'appareil de projection comporte une lentille à focale ultra courte.

7. Ensemble selon la revendication 6, et comprenant en outre un second dispositif de projection (87), les premier et second dispositifs de projection (85, 87) étant disposés de manière à projeter les première et seconde parties respectives d'une image entière (98) réalisée des première et seconde parties d'image sur la surface de projection (31), ladite surface reflétant l'image entière (98) vers un spectateur et permettant à la lumière provenant des premier et second dispositifs de projection (85, 87) de franchir le maillage et de projeter les parties d'image secondaires respectives sur une zone située sur le côté opposé de la surface (31) par rapport aux premier et seconds dispositifs de projection (85, 87).

8. Surface de projection ou ensemble selon l'une des revendications précédentes, dans laquelle les un ou plusieurs fils (42, 43 ; 81) ont été traités avec un agent anti-ternissant.

9. Surface de projection ou ensemble selon la revendication 8, dans laquelle les un ou plusieurs fils (42, 43 ; 81) ont été traités avec un revêtement à la fois ignifuge et anti-ternissant.

10. Surface de projection ou ensemble selon l'une quelconque des revendications précédentes, dans laquelle les un ou plusieurs fils (42, 43 ; 81) ont été traités avec un acétate de polyvinyle ou une substance résineuse à base de polyuréthane.

11. Système comprenant une surface de projection ou un ensemble selon l'une quelconque des revendications précédentes, comprenant en outre un seconde surface de projection (31) et un premier et un second dispositifs de capture d'image (3, 12) dans lequel ladite première surface de projection est destinée à être placée en un premier emplacement (8), et ladite seconde surface de projection est destinée à être placée en un second emplacement (9), ladite première surface de projection et ladite seconde surface de projection devant être être placées entre les premier et second spectateurs respectifs (1, 10) des surfaces (31) ainsi qu'entre lesdits premier et second dispositifs de capture d'image respectifs (3, 12), la disposition étant telle que la surface de projection (4) au premier emplacement (8) est destinée à recevoir la projection d'une image (5) du spectateur (10) au second emplacement (9), et la surface de projection (13) au second emplacement (9) est destinée à recevoir la projection d'une image (14) du spectateur (1) au premier emplacement (8).

12. Système selon la revendication 11, dans lequel l'un ou les deux dispositifs de capture d'image respectifs (3, 12) sont destinés à être placés essentiellement au niveau oculaire de la ou des images projetées respectives (5, 14).

13. Procédé consistant à tricoter un ou plusiers fils de manière à former une zone de projection, le fil ou au moins l'un des fils (42, 43 ; 81) est revêtu d'une substance métallique, et liant entre elles de boucles tricotées du fil en vue de créer un maillage doté de trous (44), **caractérisé en ce que** la zone de projection est une gaze semi-transparente faisant voir un arrière-plan situé derrière ladite zone.

14. Procédé selon la revendication 13, dans lequel les trous définissent des chemins permettant à la lumière de franchir le maillage afin que celui-ci paraisse semi-transparent lorsque l'éclairage derrière la surface (31) est plus intense que l'éclairage sur le côté d'un spectateur.
